# DEMANDE DE BREVET EUROPEEN

(11) **EP 3 418 594 A1**
(43) Date de publication de la demande: **26.12.2018**
(21) Numéro de dépôt: 17177523.2
(22) Date de dépôt: 22.06.2017
(51) Int. Cl.: F16C 19/16, G04B 31/012

(54) **PIÈCE MÉCANIQUE MODULAIRE**

(71) Demandeur: ETA SA Manufacture Horlogère Suisse, 2540 Grenchen (CH)
(72) Inventeur: COURVOISIER, Raphaël, 2035 Corcelles (CH); BERDAT, Xavier, 2800 Delémont (CH); CONUS, Thierry, 2543 Lengnau (CH)
(74) Mandataire: ICB SA

(57) **Abrégé**

L'invention concerne une pièce mécanique comportant un roulement à billes, ledit roulement comportant :
* une pluralité de billes (1) ;
* une bague interne (2) et une bague externe (3) concentriques, la bague interne et la bague externe définissant ensemble un chemin de roulement pour lesdites billes de manière à ce que chaque bille soit en contact avec lesdites bagues en une pluralité de points de contact,
Ladite pièce mécanique étant caractérisée en ce qu'elle comprend également une couronne de couplage (10) fixée sur la bague externe, ladite couronne de couplage étant adaptée pour coopérer avec un moyen de couplage correspondant d'un élément fonctionnel extérieur pour permettre la rotation de la bague externe par rapport à la bague interne.

Application à la réalisation de roulements pour mouvement horloger.

## Description

### Domaine technique de l'invention

L'invention concerne une pièce mécanique comprenant un roulement à billes. L'invention trouve une application plus particulièrement dans le domaine de l'horlogerie mais peut également être envisagée pour des applications dans le domaine du médical ou de la micromécanique.

### Arrière-plan technologique de l'invention

De manière connue, un roulement à billes comprend une bague externe et une bague interne concentriques définissant ensemble un chemin de roulement pour une pluralité de billes de manière à ce que chaque bille soit en contact avec les dites bagues en une pluralité de points de contact, les billes étant séparées les unes des autres par une cage. Un tel roulement est par exemple décrit dans la publication EP1520111.

Afin d'entraîner en rotation l'une des bagues par rapport à l'autre, la paroi externe de la bague externe est généralement dentée pour engrener avec un rouage externe et la bague interne peut être percée d'un évidement afin de permettre sa fixation. Un tel roulement peut être utilisé entre autre pour suspendre une masse oscillante dans un mouvement de montre mécanique.

Cependant, chaque mouvement horloger possède ses propres moyens de fixation et ses propres rouages, de sorte qu'un roulement est de fait destiné exclusivement à un mouvement horloger hôte pour lequel il a été conçu. Ceci implique donc de fabriquer, stocker et gérer un grand nombre de références de roulements dédiés chacun à un mouvement hôte, ce qui complique et renchérit le processus de fabrication des mouvements.

Par ailleurs bien que fournissant des propriétés satisfaisantes pour les applications horlogères décrites ci-dessus, les roulements présentent l'inconvénient d'être réalisés généralement en matériaux magnétiques et d'être susceptibles de perturber la marche des mouvements équipés de ces roulements, après avoir été soumis à un champ magnétique.

### Résumé de l'invention

L'invention vise à améliorer la technique connue, en proposant une solution visant à pallier tout ou partie des inconvénients ou limites des roulements décrits ci-dessus.

A cet effet, l'invention propose selon un premier mode de réalisation de l'invention une pièce mécanique comportant un roulement à billes, ledit roulement comportant :
- une pluralité de billes;
- une bague interne et une bague externe concentriques, la bague interne et la bague externe définissant ensemble un chemin de roulement pour lesdites billes de manière à ce que chaque bille soit en contact avec lesdites bagues en une pluralité de points de contact,
ladite pièce mécanique étant caractérisée en ce qu'elle comprend également une couronne de couplage fixée sur la bague externe, ladite couronne de couplage étant adaptée pour coopérer avec un moyen de couplage correspondant d'un élément fonctionnel extérieur pour permettre la rotation de la bague externe par rapport à la bague interne.

La couronne de couplage selon l'invention, fixée par exemple sur la paroi extérieure cylindrique de la bague externe, permet d'adapter aisément la bague externe du roulement à la structure du moyen de couplage de l'élément fonctionnel extérieur auquel elle doit être couplée.

Ainsi la bague externe du roulement à billes devient modulaire et, par le choix d'une couronne adaptée, le roulement peut être adapté facilement au moyen de couplage de l'élément fonctionnel extérieur auquel il doit être couplé. Il est ainsi possible de développer un unique roulement à billes, utilisable pour plusieurs mouvements horlogers différents, seule la couronne devant être adaptée en fonction du mouvement horloger. Il est ainsi possible d'optimiser la partie fonctionnelle du roulement (billes et forme du chemin de roulement), puis d'ajuster indépendamment la couronne formant le moyen de couplage de la bague externe à son environnement externe.

De préférence, la couronne de couplage est une couronne dentée adaptée pour engrener avec une denture d'un rouage extérieur correspondant.

Selon une caractéristique préférée de l'invention, la paroi externe de la bague externe comprend une portée sur laquelle vient s'appuyer une portée correspondante d'une paroi interne de la couronne de couplage, et de manière avantageuse, la couronne de couplage et la bague externe sont assemblées par collage, soudage, sertissage, ou chassage.

L'invention propose également selon un deuxième mode de réalisation une pièce mécanique comportant
- une pluralité de billes ;
- une bague interne et une bague externe concentriques, la bague interne et la bague externe définissant ensemble un chemin de roulement pour lesdites billes de manière à ce que chaque bille soit en contact avec lesdites bagues en une pluralité de points de contact,
la pièce mécanique étant caractérisée en ce que la bague interne comprend un évidement central s'étendant selon un axe de la bague interne, la pièce mécanique comprenant également un noyau de couplage fixé à l'intérieur de l'évidement central de la bague interne, ledit noyau de couplage étant adapté pour coopérer avec un moyen de couplage extérieur correspondant pour permettre la rotation de la bague interne par rapport à la bague externe.

Le noyau de couplage a ici un rôle similaire à la couronne de couplage du premier aspect de l'invention. Le noyau de couplage permet en effet de séparer la partie fonctionnelle de la bague interne, c'est-à-dire son rôle dans la réalisation du chemin de roulement, de la partie de couplage de la bague interne à son environnement extérieur ; le noyau de couplage permet ainsi d'adapter aisément la bague interne du roulement à la structure de l'élément fonctionnel extérieur auquel elle doit être couplée. La modularité de la bague interne de la pièce mécanique selon l'invention est ainsi améliorée.

Selon une caractéristique préférée de ce deuxième aspect de l'invention, le noyau comprend :
- au moins un évidement adapté pour recevoir un moyen de fixation d'un élément fonctionnel extérieur, ou
- un évidement central concentrique à la bague interne, une paroi de l'évidement central étant dentée pour engrener avec une denture correspondante d'un rouage externe.

De préférence, le noyau de couplage et la bague interne sont assemblés par collage, soudage, sertissage, ou chassage.

L'invention propose selon un troisième mode de réalisation une pièce mécanique comportant un roulement à billes, ledit roulement comportant :
- une pluralité de billes;
- une bague interne et une bague externe concentriques, la bague interne et la bague externe définissant ensemble un chemin de roulement pour lesdites billes de manière à ce que chaque bille soit en contact avec lesdites bagues en une pluralité de points de contact,
la pièce mécanique étant caractérisée en ce que :
- elle comprend également une couronne de couplage fixée sur une paroi externe de la bague externe, ladite couronne de couplage étant adaptée pour coopérer avec un moyen de couplage correspondant d'un élément fonctionnel extérieur, et
- la bague interne comprend un évidement central s'étendant selon un axe de la bague interne, et la pièce mécanique comprend également un noyau de couplage fixé à l'intérieur de l'évidement central de la bague interne, le dit noyau de couplage étant adapté pour coopérer avec un moyen de couplage d'un élément fonctionnel extérieur correspondant.

La modularité de la pièce mécanique selon cet aspect de l'invention est ainsi maximale.

D'un point de vue procédé de fabrication, l'invention permet d'obtenir une pièce mécanique modulaire pour laquelle l'étape de différentiation (choix et positionnement de la couronne, choix et positionnement du noyau) est retardée en fin de procédé. Il est ainsi possible de réaliser un plus grand nombre de composants standards (roulement, couronne, noyau), ce qui permet de réduire les coûts de fabrication. La modification d'une exécution de denture (géométrie, couleur, matière, ...) est simplifiée, et la modification du moyen de couplage du noyau pour des critères techniques ou esthétiques est également simplifiée.

De manière avantageuse, la couronne de couplage et/ou le noyau de couplage sont réalisés en un matériau amagnétique et de préférence, ces derniers sont choisis parmi le groupe comprenant un acier du type austénitique, de préférence inoxydable, un alliage de cobalt du type austénitique, un alliage de nickel du type austénitique, un alliage de titane amagnétique, un alliage d'aluminium amagnétique, un laiton (Cu-Zn) ou un laiton spécial (Cu-Zn avec Al et/ou Si et/ou Mn), un bronze (Cu-Sn), un bronze à l'aluminium, un cuivre-aluminium (comprenant optionnellement Ni et/ou Fe), un cuivre-nickel, un Maillechort (Cu-Ni-Zn), un cuivre-béryllium (Cu-Be), un cuivre-nickel-étain, un cuivre-nickel-silicium, un cuivre-nickel-phosphore, un cuivre-titane, les proportions des différents éléments des alliages étant choisies pour leur conférer des propriétés amagnétiques ainsi qu'une bonne usinabilité.

Un matériau synthétique (par exemple en PTFE, POM) ou une céramique (par exemple à base de Al₂O₃, ou de ZrO₂) peuvent aussi être choisis comme alternative à un matériau métallique amagnétique pour la couronne de couplage et/ou le noyau de couplage.

Dans le cas par exemple d'une pièce mécanique utilisée dans un mouvement de montre pour la fixation d'une masse oscillante, la couronne de couplage est la partie de la pièce mécanique la plus proche des éléments sensibles à un champ magnétique perturbateur. Utiliser une couronne en matériau amagnétique limite ainsi fortement la perturbation globale engendrée par la pièce mécanique selon l'invention.

Selon une caractéristique avantageuse, la couronne de couplage et/ou le noyau de couplage sont recouverts d'un revêtement modifiant un aspect d'une surface extérieure de la couronne de couplage et/ou du noyau de couplage.

Dans une variante de réalisation particulière, la couronne de couplage et/ou le noyau de couplage sont réalisés en aluminium anodisé ce qui permet de durcir superficiellement ces composants tout en les colorant et conférant ainsi au roulement un aspect esthétique intéressant.

Selon une autre variante de réalisation de l'invention de la bague externe et la bague interne sont réalisées en acier et les billes sont réalisées en acier ou en céramique, de préférence en oxyde de zirconium.

Selon une application préférée, la pièce mécanique de l'invention porte une masse oscillante dans un dispositif de remontage automatique d'un mouvement d'horlogerie

### Brève description des figures

D'autres caractéristiques et avantages de la présente invention ressortiront plus clairement de la description détaillée qui suit d'exemples de mise en oeuvre de pièce mécaniques selon l'invention. Ces exemples sont donnés à titre purement illustratif et non limitatif et sont à lire en liaison avec les dessins annexés dans lesquels :
- la figure 1 est une vue en coupe d'un roulement connu utilisable par exemple dans un dispositif de remontage automatique d'une montre bracelet,
- les figures 2-4 sont des vues en coupe de pièces mécaniques selon l'invention et
- la figure 5 est vue de dessus schématique d'un dispositif de remontage automatique utilisable dans une montre bracelet comprenant une pièce mécanique selon un mode de réalisation de l'invention.

### Description détaillée de modes de réalisation de l'invention

Comme dit précédemment, l'invention concerne une pièce mécanique comportant un roulement à billes, ledit roulement comportant :
- une pluralité de billes 1 ;
- une bague interne 2 et une bague externe 3 concentriques, la bague interne et la bague externe définissent ensemble un chemin de roulement pour lesdites billes de manière à ce que chaque bille soit en contact avec lesdites bagues en une pluralité de points de contact.

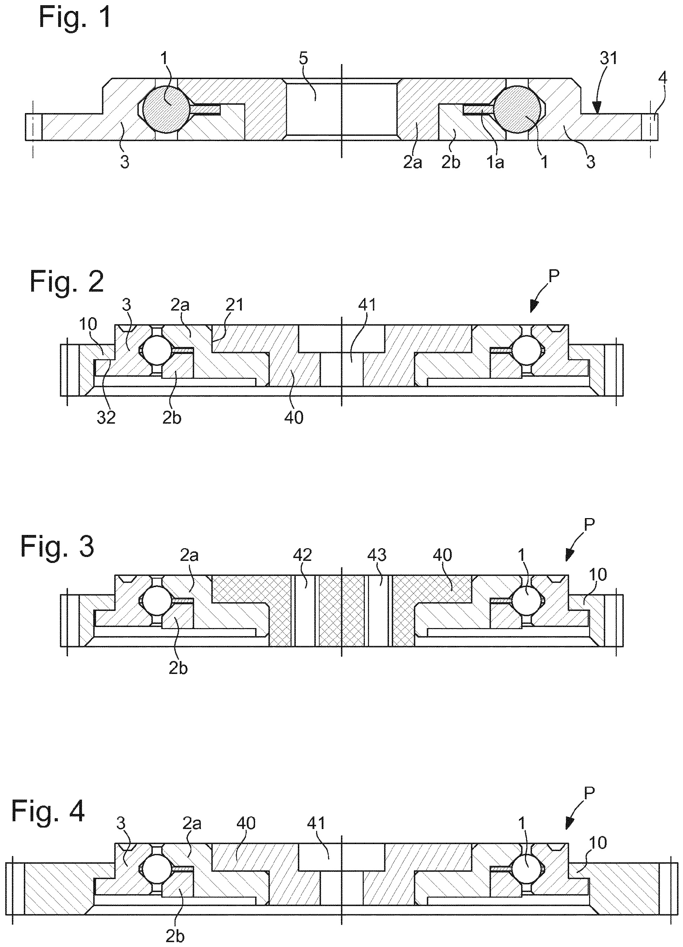

La figure 1 montre un roulement connu utilisable par exemple dans un dispositif de remontage automatique d'une montre bracelet. La bague interne est ici réalisée en deux parties 2a, 2b et une cage 1a est positionnée entre les billes pour maintenir les billes espacées les unes des autres. L'assemblage du roulement se fait en positionnant les billes 1 et la cage 1a dans le chemin de roulement défini par la bague externe et la partie 2a de la bague interne, la partie 2b restante de la bague interne étant mise en place ensuite pour fermer le roulement.

Dans une variante, la bague interne est réalisée en une seule partie et la bague externe est réalisée en deux parties.

Pour limiter les frottements, la bague externe 3, la bague interne 2, et les billes 1 peuvent être réalisées en acier inox ; en variante, les bagues peuvent être réalisées en acier inox et les billes en céramique, par exemple en oxyde de zirconium ; en variante encore, les bagues et les billes peuvent être en céramique.

Le roulement comprend en outre une paroi externe de la bague externe 3 qui est dentée (dents 4) sur au moins une partie de sa hauteur pour engrener avec un rouage extérieur correspondant. La paroi externe comprend également une portée 31 sur laquelle peut venir s'appuyer la masse oscillante (non représentée) à fixer. La bague interne 2a, 2b est quant à elle percée d'un évidement central 5 adapté pour coopérer avec un moyen de couplage (non représenté) tel qu'un axe ou une vis, ou un rouage.

Par rapport à un roulement selon la figure 1, une pièce mécanique selon l'invention se distingue en ce qu'elle comprend également :
- selon un premier mode de réalisation, une couronne de couplage 10 fixée, et de préférence rapportée et fixée directement sur une paroi externe de la bague externe 3 ; ou
- selon un deuxième mode de réalisation, un noyau de couplage 40 fixé à l'intérieur d'un évidement central 21 de la bague interne ; ou
- selon un troisième mode de réalisation, une couronne de couplage 10 fixée sur une paroi externe de la bague externe et un noyau de couplage 40 fixé à l'intérieur d'un évidement central 21 de la bague interne, c'est-à-dire une combinaison des deux modes de réalisation précédents.

Ce troisième mode de réalisation est représenté sur les figures 2 à 5.

Dans l'exemple illustré, la couronne de couplage 10 est fixée directement sur une paroi externe cylindrique de la bague externe. La couronne de couplage 10 est adaptée pour coopérer avec un moyen de couplage correspondant d'un élément fonctionnel extérieur pour permettre la rotation de la bague externe par rapport à la bague interne. La couronne de couplage selon l'invention vient en lieu et place des dents 4 d'un roulement connu. Il va de soi que selon des variantes de réalisation la couronne 10 peut être fixée sur ou sous la bague extérieure.

Dans les exemples représentés fig. 2-5, la couronne de couplage est une couronne dentée 10 adaptée pour engrener avec un rouage extérieur correspondant. Une telle couronne est bien adaptée notamment pour l'entraînement d'un rouage par une masse oscillante dans un mouvement horloger mécanique. Afin de faciliter la mise en place et le positionnement de la couronne de couplage sur la bague externe, la bague externe peut comprendre une portée 32 sur laquelle vient s'appuyer une portée correspondante d'une paroi interne de la couronne de couplage. Dans l'exemple de la figure 4, la couronne de couplage utilisée a un diamètre externe plus grand que le diamètre externe de la couronne de couplage utilisée pour les exemples des figures 2 et 3, les éléments principaux du roulement, à savoir les billes 1, la bague interne 2 (2a, 2b) et la bague externe 3 sont par contre les mêmes.

La couronne de couplage et la bague externe sont assemblées par collage, soudage, sertissage ou chassage. Pour des applications où un remplacement de la couronne doit être envisagé au cours de la durée d'utilisation de la pièce mécanique, une fixation amovible par chassage est préférée.

Pour une utilisation en environnement magnétique fort, dans les exemples mis en oeuvre, la couronne de couplage 10 est réalisée en un matériau amagnétique, ici un alliage Cuivre- Béryllium typiquement un alliage CuBe2Pb ou CuBe2.

D'autres matériaux amagnétiques peuvent être envisagés, des matériaux choisi parmi le groupe comprenant un acier du type austénitique, de préférence inoxydable, un alliage de cobalt du type austénitique, un alliage de nickel du type austénitique, un alliage de titane amagnétique, un alliage d'aluminium amagnétique, un laiton (Cu-Zn) ou un laiton spécial (Cu-Zn avec Al et/ou Si et/ou Mn), un bronze (Cu-Sn), un bronze à l'aluminium, un cuivre-aluminium (comprenant optionnellement Ni et/ou Fe), un cuivre-nickel, un Maillechort (Cu-Ni-Zn), un cuivre-nickel-étain, un cuivre-nickel-silicium, un cuivre-nickel-phosphore, un cuivre-titane, les proportions des différents éléments des alliages étant choisies pour leur conférer des propriétés amagnétiques ainsi qu'une bonne usinabilité.

Par exemple, l'acier austénitique est un acier austénitique inox HIS (High Interstitial Steels), tel que l'acier Cr-Mn-N P2000 de Energietechnik Essen GmbH.

L'alliage de cobalt du type austénitique peut comprendre au moins 39% de cobalt, typiquement un alliage connu sous le nom « Phynox » ou la désignation DIN K13C20N16Fe15D7 ayant typiquement 39% de Co, 19% de Cr, 15% de Ni et 6% de Mo, 1.5% de Mn, 18% de Fe et le soldes d'additifs.

L'alliage de nickel de type austénitique peut comprendre au moins 33% de nickel typiquement un alliage connu sous la désignation MP35N® ayant typiquement 35% de Ni 20% de Cr, 10% de Mo, 33% de Co et le solde d'additifs.

L'alliage de titane comprend de préférence au moins 85% de titane.

Les laitons peuvent comprendre les alliages CuZn39Pb3, CuZn37Pb2, ou CuZn37.

Les laitons spéciaux peuvent comprendre les alliages CuZn37Mn3Al2PbSi, CuZn23Al3Co ou CuZn23Al6Mn4Fe3Pb.

Les Maillechort peuvent comprendre les alliages CuNi25Zn11Pb1 Mn, CuNi7Zn39Pb3Mn2 ou CuNi18Zn19Pb1.

Les bronzes peuvent comprendre les alliages CuSn9 ou CuSn6.

Les bronzes à l'aluminium peuvent comprendre les alliages CuAl9 ou CuAl9Fe5Ni5.

Les alliages cuivre-nickel peuvent comprendre l'alliage CuNi30.

Les alliages cuivre-nickel-étain peuvent comprendre les alliages CuNi15Sn8, CuNi9Sn6 ou CuNi7.5Sn5 (commercialisé par exemple sous la dénomination Declafor).

Les alliages cuivre-titane peuvent comprendre l'alliage CuTi3Fe.

Les alliages cuivre-nickel-silicium peuvent comprendre l'alliage CuNi3Si.

Les alliages cuivre-nickel-phosphore peuvent comprendre l'alliage CuNi1P.

Les valeurs de composition sont indiquées en pourcentage massique. Les éléments sans indication de valeur de composition sont soit le reste (majoritaire) soit des éléments pour lesquels le pourcentage dans la composition est inférieur à 1% en poids.

L'alliage de cuivre amagnétique peut être également un alliage ayant pour composition massique entre 14.5% et 15.5% de Ni, entre 7.5% et 8.5% de Sn, au maximum 0.02% de Pb et le reste de Cu. Un tel alliage est commercialisé sous la marque Toughmet® par la société Materion.

Bien évidemment, d'autres alliages amagnétiques sont envisageables dès lors que la proportion de leurs constituants leur confère des propriétés amagnétiques ainsi qu'une bonne usinabilité.

La bague interne 2 comprend un évidement central 21 s'étendant selon un axe de la bague interne. L'évidement central 21 est concentrique à la bague interne et le noyau de couplage 40 est fixé à l'intérieur de l'évidement 21. Le noyau de couplage 40 est adapté pour coopérer avec un moyen de couplage correspondant d'un élément fonctionnel extérieur pour permettre la rotation de la bague interne 2 par rapport à la bague externe 3.

A cet effet, dans l'exemple des figures 2 et 4, le noyau de couplage 40 est percé d'un évidement central 41 concentrique à la bague interne 2 ; une paroi de l'évidement central 41 est dentée pour engrener avec un rouage externe.

Selon un autre mode de réalisation, dans l'exemple de la figure 3, deux évidements 42, 43 filetés sont prévus pour une fixation par deux vis formant un moyen de couplage (fixation ici) externe. En variante, un unique évidement fileté en position centrale peut aussi être envisagé.

Le noyau de couplage 40 et la bague interne sont assemblés par collage, soudage, sertissage ou chassage. Pour certaines applications, une fixation amovible par chassage est préférable.

Le noyau de couplage 40 peut être réalisé en un matériau amagnétique pour limiter sa sensibilité aux champs magnétiques. A titre d'exemple, le noyau peut être réalisé ici comme la couronne de couplage 10 en un alliage Cuivre- Béryllium typiquement un alliage CuBe2Pb ou CuBe2. Les autres matériaux appartenant à la liste de matériaux mentionnés en liaison avec la couronne de couplage 10 conviennent également.

Pour des raisons esthétiques, la couronne de couplage 10 et/ou le noyau de couplage 40 peuvent être recouverts d'un revêtement modifiant un aspect de leurs surfaces extérieures par exemple par des traitements de dorage, nickelage ou rhodiage ou tout autre dépôt PVD.

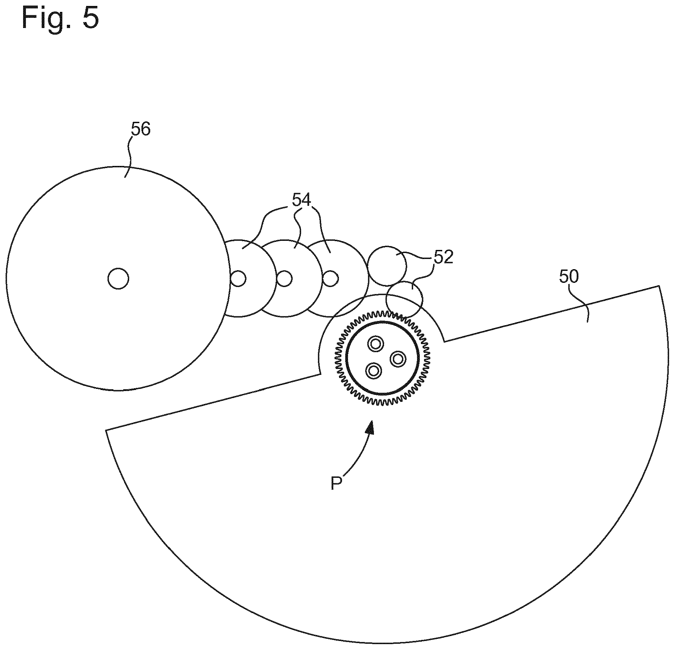

La figure 5 montre un dispositif de remontage automatique utilisable dans une montre-bracelet équipée d'une pièce mécanique P selon l'invention qui porte la masse oscillante 50. La pièce mécanique P fixée sur le mouvement, par exemple vissé sur une planche ou pont d'automatique par l'intermédiaire du noyau de couplage 40.

La couronne de couplage 60 est de la masse oscillante 30 et entraîne en rotation un système redresseur représenté schématiquement à la Fig. figure 5 par les deux mobiles redresseurs 52 bien connues et aptes à transformer les mouvements de rotation de la masse quel que soit leur sens en un mouvement de remontage dans un seul sens, par exemple au moyen de roues à cliquet. Les mobiles redresseurs 52 sont suivis par un rouage de remontage 54 engrenant à son extrémité avec le rochet 56 afin d'armer le ressort de barillet.

Il va de soi que selon des variantes de réalisation, les bagues intérieure et extérieure du roulement peuvent être respectivement constituées d'une ou plusieurs pièces et le roulement peut ne pas comprendre de cage et dans ce cas les billes viennent en contact les unes avec les autres.

### Nomenclature

- 1: billes
- 1a :: cage
- 2: bague interne
- 2a, 2b :: deux parties de la bague interne
- 21: évidement
- 3: bague externe
- 31: portée
- 32: portée
- 4: dents
- 5: évidement central
- 10: couronne de couplage
- 40: noyau de couplage
- 41: évidement central
- 42, 43: évidements
- 50: masse oscillante
- 52: mobiles inverseurs
- 54: rouage de remontage
- 56: rochet

## Revendications

1. Pièce mécanique comportant un roulement à billes, ledit roulement comportant :
* une pluralité de billes (1) ;
* une bague interne (2) et une bague externe (3) concentriques, la bague interne et la bague externe définissant ensemble un chemin de roulement pour lesdites billes de manière à ce que chaque bille soit en contact avec lesdites bagues en une pluralité de points de contact,
Ladite pièce mécanique étant **caractérisée en ce qu'**elle comprend également une couronne de couplage (10) fixée sur la bague externe, ladite couronne de couplage étant adaptée pour coopérer avec un moyen de couplage correspondant d'un élément fonctionnel extérieur pour permettre la rotation de la bague externe par rapport à la bague interne.

2. Pièce mécanique selon la revendication 1 **caractérisée en ce que** la couronne de couplage est une couronne dentée adaptée pour engrener avec une denture d'un rouage extérieur correspondant.

3. Pièce mécanique selon l'une des revendications précédentes **caractérisée en ce que** la paroi externe de la bague externe comprend une portée (32) sur laquelle vient s'appuyer une portée correspondante d'une paroi interne de la couronne de couplage.

4. Pièce mécanique selon l'une des revendications précédentes dans laquelle la couronne de couplage et la bague externe sont assemblées par collage, soudage, sertissage ou chassage.

5. Pièce mécanique comportant un roulement à billes, ledit roulement comportant :
• une pluralité de billes (1) ;
• une bague interne (2) et une bague externe (3) concentriques, la bague interne et la bague externe définissant ensemble un chemin de roulement pour lesdites billes de manière à ce que chaque bille soit en contact avec lesdites bagues en une pluralité de points de contact,
ladite pièce mécanique **caractérisée en ce que** la bague interne (2) comprend un évidement central (21) s'étendant selon un axe de la bague interne, la pièce mécanique comprenant également un noyau de couplage (40) fixé à l'intérieur de l'évidement central de la bague interne, ledit noyau de couplage étant adapté pour coopérer avec un moyen de couplage extérieur correspondant pour permettre la rotation de la bague interne par rapport à la bague externe.

6. Pièce mécanique selon la revendication 5 dans laquelle le noyau comprend :
• au moins un évidement (42, 43) adapté pour recevoir un moyen de fixation d'un élément fonctionnel extérieur, ou
• un évidement central (41) concentrique à la bague interne, une paroi de l'évidement central étant dentée pour engrener avec une denture correspondante d'un rouage externe.

7. Pièce mécanique selon l'une des revendications 5 ou 6 dans laquelle le noyau de couplage et la bague interne sont assemblés par collage, soudage, sertissage ou chassage.

8. Pièce mécanique comportant un roulement à billes, ledit roulement comportant :
• une pluralité de billes (1) ;
• une bague interne (2) et une bague externe (3) concentriques, la bague interne et la bague externe définissant ensemble un chemin de roulement pour lesdites billes de manière à ce que chaque bille soit en contact avec lesdites bagues en une pluralité de points de contact,
ladite pièce mécanique étant **caractérisée en ce que** :
• la pièce mécanique comprend également une couronne de couplage (10) fixée sur une paroi externe de la bague externe, ladite couronne de couplage étant adaptée pour coopérer avec un moyen de couplage correspondant d'un élément fonctionnel extérieur, et
• la bague interne (2) comprend un évidement central (21) s'étendant selon un axe de la bague interne, et la pièce mécanique comprend également un noyau de couplage (40) fixé à l'intérieur de l'évidement central de la bague interne, le dit noyau de couplage étant adapté pour coopérer avec un moyen de couplage d'un élément fonctionnel extérieur correspondant.

9. Pièce mécanique selon l'une des revendications précédentes **caractérisée en ce que** la couronne de couplage et/ou le noyau de couplage est réalisée en un matériau amagnétique.

10. Pièce mécanique selon la revendication précédente, **caractérisée en ce que** la couronne de couplage et/ou le noyau de couplage sont réalisés en un matériau choisi parmi le groupe comprenant un acier du type austénitique, un alliage de cobalt du type austénitique, un alliage de nickel du type austénitique, un alliage de titane, un alliage d'aluminium, un laiton à base de cuivre et de zinc, un cuivre-béryllium, un Maillechort, un bronze, un bronze à l'aluminium, un cuivre-aluminium, un cuivre-nickel, un cuivre-nickel-étain, un cuivre-nickel-silicium, un cuivre-nickel-phosphore, un cuivre-titane, le téflon afin de limiter sa sensibilité aux champs magnétiques.

11. Pièce mécanique selon l'une des revendications précédentes **caractérisée en ce que** la couronne de couplage et/ou le noyau de couplage sont recouverts d'un revêtement modifiant un aspect d'une surface extérieure de la couronne de couplage et/ou du noyau de couplage.

12. Pièce mécanique selon la revendication 10 **caractérisée en ce que** la couronne de couplage et/ou le noyau de couplage sont réalisés en aluminium anodisé.

13. Pièce mécanique selon l'une des revendications précédentes **caractérisée en ce que** la bague externe et la bague interne sont réalisées en inox

14. Pièce mécanique selon la revendication 13 **caractérisée en ce que** les billes sont réalisées en acier ou en céramique, de préférence en oxyde de zirconium.

15. Pièce mécanique selon l'une quelconque des revendications précédentes **caractérisée en ce qu'**elle porte une masse oscillante dans un dispositif de remontage automatique d'un mouvement d'horlogerie.
